# DEMANDE DE BREVET EUROPEEN

(11) **EP 0 890 613 A1**
(43) Date de publication de la demande: **13.01.1999**
(21) Numéro de dépôt: 98401600.6
(22) Date de dépôt: 26.06.1998
(51) Int. Cl.: C08L 61/24, C08G 14/08

(54) **Procédé de fabrication de résines phénoliques pour la fabrication de produits contenant des fibres de verre et des fibres minérales**

(30) Priorité: 11.07.1997 FR 9708854
(71) Demandeur: CECA S.A., 92800 Puteaux (FR)
(72) Inventeur: Fouquay, Stéphane, 76130 Mont Saint Aignan (FR); Benoit, Jean-Marc, 78100 Saint Germain en Laye (FR); Poulet, Chantal, 60138 Chiry-Ourscamp (FR)
(74) Mandataire: Haicour, Philippe

(57) **Abrégé**

Un procédé de fabrication de résines phénoliques de catalyse par hydroxyde alcalino-terreux (hydroxyde de calcium) ne comportant aucune étape de filtration. Ce résultat est obtenu en retenant la précipitation des espèces calciques par l'utilisation conjuguée d'un chélatant / séquestrant et d'un polymère anionique dispersant. Résines stables au stockage et à excellente tolérance à l'eau.

## Description

Dans l'élaboration de matériaux insonorisants et calorifuges tels que plaques et mats en fibres minérales inorganiques (laines de verre et de roche, diabase, basalte, laitier, le verte), on fait appel à des résines phénoliques dont le rôle est d'accroître leur résistance aux agressions atmosphériques ou chimiques. Ces résines, qui sont habituellement utilisées à des dosages de 3 à 8 % de résine sèche rapportés à la masse des fibres minérales, sont des produits de condensation modérée de phénol et de formaldéhyde en solution aqueuse, une condensation opérée en présence d'une catalyseur alcalin soluble dans l'eau, et qui sont essentiellement constitués par des phénols-alcools à un ou deux noyaux méthylol-phénols. Il est d'ailleurs d'usage de modifier ces résines phénoliques avec de l'urée pour en abaisser les coûts du liant, ce qui a n outre l'avantage de fixer le formaldéhyde libre.

A l'origine, ce sont les solutions aqueuses d'hydroxydes alcalins, surtout la lessive de soude, qui ont servi de catalyseurs pour la réaction de condensation. La qualité des laines minérales préparées avec de tels liants est sensiblement altérée sous l'effet de l'humidité. Même une neutralisation de la fraction alcaline de ces résines en fin de condensation, par exemple avec de l'acide sulfurique dilué, n'a pas apporté d'amélioration sensible de leur tenue à l'humidité. On a attribué cette instabilité à la présence dans le matériau fini, même à l'état durci, de cendres solubles constituées d'oxyde de sodium, de carbonate de sodium et/ou sulfate de sodium. Aussi a-t-on utilisé comme catalyseurs des hydroxydes alcalino-terreux, en particulier l'hydroxyde de calcium, qui présentent l'avantage sur les hydroxydes alcalins de pouvoir être précipités en fin de condensation, par addition d'acide sulfurique ou phosphorique dilué, d'anhydride carbonique, de sulfate d'ammonium ou de carbonate d'ammonium et de pouvoir être séparés de la solution aqueuse sous forme de sels insolubles dans l'eau. Avec cette technique opératoire, on obtient des résines qui sont pratiquement exemptes de cendres. Les matériaux à base de fibres minérales préparés à partir de ces résines filtrées possèdent une excellente tenue à l'humidité.

Il y a cependant un inconvénient majeur au procédé décrit ci-dessus : les précipités insolubles ainsi formés doivent être éliminés par filtration, à défaut de quoi on risque l'obstruction des buses de distribution de la résine lors de sa mise en oeuvre. Cette filtration est une opération pénible qui s'accompagne d'un perte no négligeable de résine; de surcroît, la mise à la décharge du gâteau de filtration, contenant des résines phénoliques, et qui peut représenter de 5 à 10 % du produit de fin de réaction non filtré, est coûteuse et constitue de nos jours un sérieux problème d'environnement.

On a donc développé des résines phénoliques de catalyse alcalino-terreuse dans la préparation desquelles le catalyseur alcalino-terreux était neutralisé sous forme d'espèces insolubles, mais de telle façon que sa précipitation ne se produise pas. C'est ainsi qu'on a mis en oeuvre l'apport d'ions sulfate et ammonium (EP 0 190 130 - Rutgerswerke), ce qui ne donne cependant qu'un délai de quelques heures avant la réapparition de précipité calcique, obère toute possibilité de transport et de réserve de la résine et la consigne à une utilisation proche du site de production; ou encore l'addition du couple acide oxalique / émulsifiant protéique (US 4,060,054 - Monsanto) qui retient la coalescence du précipité de calcium sous forme d'oxalate, mais qui, outre la présence du colloïde protecteur qui peut être préjudiciable à la qualité des agglomérés, provoque une forte augmentation de la viscosité du produit.

Le problème non résolu est donc celui de l'obtention industrielle de résines phénol / formol de catalyse alcalino-terreuse (calcique), indemne de précipité insoluble, n'exigeant donc aucune filtration, et dont la stabilité soit assurée sur une période de 10 à 15 jours correspondant à la stabilité propre de la résine entre 10 et 15°C, alors que la stabilité vis-à-vis de la précipitation des ions alcalino-terreux (calciques) visée dans la présente invention est supérieure à 1 mois.

Ce résultat est atteint selon l'invention grâce à un procédé de préparation de résines phénol / formol ou de résines phénol / formol modifiées à l'urée qui comprend :
- une condensation de phénol et de formol en présence d'hydroxyde alcalino-terreux, en particulier de calcium agissant comme catalyseur de condensation,
- une addition d'urée
- l'addition d'un agent chélatant/séquestrant et d'un polymère anionique dispersant.

L'agent chélatant / séquestrant peut-être constitué d'acide 2-phosphono 1,2,4-butane tricarboxylique (APBT) (RN 37971-36-1), d'acide nitrilotriacétique (NTA), d'acide éthylènediamine tétracétique (EDTA), de diéthylènetriamine pentacétique (DPTA), d'aminophosphonates tels que l'acide aminotris(methylene phosphonique (AMP) et l'acide hydroxyethylidine-1,1-diphosphonique (HEDP), ou de produits équivalents. On préfère l'APBT et l'HEDP, et plutôt l'APBT.

Les polymères anioniques dispersants, au sens de la présente invention qui est également le sens courant pour l'homme du métier, sont des polymères hydrosolubles qui ont une aptitude à s'adsorber sur les particules solides en milieu aqueux et à provoquer et stabiliser leur dispersion par effet électrostatique, mais qui ne s'assemblent pas en micelles et ne provoquent pas d'abaissement sensible de la tension superficielle. Correspondent à cette définition, en particulier les lignosulfonates, les polynaphtalène sulfonates, les polyphosphonates, les polyphosphates et les polymères carboxyliques. On préfère les lignosulfonates et les polyacrylates homopolymères (PAA), ou copolymères ou terpolymères d'ammonium, de sodium et de potassium. Parmis les copolymères et terpolymères conviennent plus particulièrement ceux qui contiennent des substituants stériquement encombrés tels que les copolymères acide acrylique / acide 2-acrylamido-2-méthyl propane sulfonique (AA : AS), acide acrylique / acrylate d'hydroxypropyle (AA : HPA) ou acide acrylique / diméthylitaconate (AA : DMI), et le terpolymère acide acrylique / acide 2-acrylamido-2-méthyl propane sulfonique / acide styrène sulfonique (AA : AS : SS).

On utilise ces produits aux doses suivantes : les agents chélatants/séquestrants à raison de 0,3 à 1,0 % en poids, et pour l'APBT, de 0,5 à 0,6 %, et les polymères anioniques dispersants à raison de 0,1 à 1,0 %, de préférence, pour les lignosulfonates ou les (homo- ou co- ou ter-)polymères acryliques, de 0,1 à 0,5 %.

La réaction de condensation est conduite dans les conditions suivantes :
- température de condensation inférieure à 100°C,
- rapport molaire phénol / formaldéhyde de 1:1,3 à 1:4,0,
- en présence de 0,5 à 10 % d'hydroxyde de calcium comme catalyseur, quantités calculées par rapport à la quantité de phénol mise en oeuvre, de préférence entre 4 et 6 %,
- rapport pondéral urée / phénol inférieur ou tout au plus égal à 1 : 1, et de préférence de 0,4:1 à 0,6:1,
- pH maintenu entre 7,5 et 11,0, de préférence entre 8,5 et 10,5.

L'ajustement du pH est optionnel. Si toutefois on veut le maintenir dans les limites indiquées, on le réalise préférentiellement à l'aide d'ammoniaque. On peut aussi utiliser à cet effet d'autres composés organiques basiques tels que la méthylamine, l'éthylamine, l'isopropylamine, la 1-propylamine, la butylamine, la diméthylamine, la triméthylamine, la diéthylamine, la triéthylamine, l'éthanolamine, la diéthanolamine ou la triéthanolamine.

On note que dans ce procédé, il n'y a pas intervention d'agent de précipitation du type sulfurique, phosphorique ou carbonique.

Les résines ainsi préparées sont diluables. Elles acceptent l'addition de divers promoteurs d'adhésion, comme les aminosilanes, en particulier le (3-aminopropyl)triéthoxysilane, qu'on utilise alors à des doses de l'ordre de 0,05 à 0,20 % par rapport à la résine sèche.

On vérifie, par exemple en comparant les résistances sans immersion ou avec immersion de barreaux de sables enrobés, que les résines ainsi obtenues présentent une résistance à l'eau suffisante, ce qui est la condition de leur qualité pour la fabrication des matériaux constitués de fibres minérales et de résines euxmêmes résistants à l'eau.

Le procédé de préparation décrit ci-dessus est un objet de l'invention. Les résines ainsi obtenues sont nouvelles et son également un objet de l'invention.

Les exemples qui suivent, non limitatifs, feront mieux comprendre l'invention.

Dans ces exemples, on rencontrera des tests de tolérance à l'eau. Ces tests sont utilisés, tantôt comme moyen de contrôle de la fabrication des résines (c'est le test de tolérance à l'eau salée), tantôt comme caractéristique de la résine commerciale (il s'agit alors de tolérance à l'eau permutée). Le test est basé sur le fait que l'addition d'eau à une résine précipite les hauts condensats, ce qui donne une indication utile sur le taux d'avancement de la réaction de condensation et sur le taux de condensation de la résine. Pour cela, on prélève 10 ml de résine dans un erlenmeyer de 500 ml, on y ajoute lentement et en agitant doucement de l'eau ou de l'eau salée à 23°C, jusqu'à apparition d'un trouble persistant. On limite l'essai à l'addition de 250 ml d'eau, quantité à laquelle, en l'absence de trouble, on attribue à la résine une tolérance à l'eau infinie. Autrement, le volume d'eau ajoutée est pris pour mesure de la tolérance à l'eau.

### EXEMPLE 1

A une solution de 351 g de phénol dans 175,5 g d'eau additionner 30,9 g d'hydroxyde de calcium, puis introduire en 1 heure, entre 60 - 70°C, 717,8 g de formol en solution aqueuse à 50 %. Maintenir en palier à 70°C jusqu'à obtention d'une tolérance à l'eau salée (solution à 50 g NaCl/l) voisine de 1:25 à 23°C. Refroidir à 60°C.

Introduire 112,5 g d'eau et 192 g d'urée entre 60 et 45°C et maintenir 30 minutes dans cette plage de température jusqu'à dissolution complète de l'urée, refroidir à 23°C et ajouter successivement 0,5 à 0,6 % d'APBT (on prend de 1 à 1,2 % de sa solution aqueuse commerciale à 50 %, le BAYHIBIT®AM de BAYER) et 0,15 % de lignosulfonate de sodium (VANISPERSE®CB poudre de BORREGAARD LIGNOTECH) par rapport au poids total de solution de résine phénolique modiflée urée ; l'homogénéisation du milieu est obtenue quasi instantanément.

Les caractéristiques de la résine ainsi obtenue sont dans les limites suivantes :

| | |
|---|---|
| Extrait sec (170°C) | 46 ± 0,5 % |
| Viscosité (23°C) | 25 - 30 mPa.s |
| pH (23°C) | 8,5 - 9 |
| DRT* à 130°C | 95 à 120 secondes |
| Phénol libre | 0,3 à 0,4 % |
| Formol libre | 0,3 % environ |
| Tolérance à l'eau permutée | infinie |
| Couleur | brun foncé |
| Durée de vie | 15 jours environ |

| | |
|---|---|
| * Le DRT ou Drying Resin Time est le test rapide de contrôle de la réactivité des résines thermodurcissables, très utilisé pour caractériser les résines phénoliques liquides. | |

La résine reste exempte de précipité pendant au moins un mois.

### EXEMPLE 2

A une solution de 351 g de phénol dans 175,5 g d'eau, additionner 30,9 g d'hydroxyde de calcium, puis introduire en 1 heure, entre 60 - 70°C, 717,8 g de formol en solution aqueuse à 50 %. Maintenir en palier à 70°C jusqu'à obtention d'une tolérance à l'eau salée (solution à 110 g NaCl/l) voisine de 1:25 à 23°C. Refroidir à 60°C.

Introduire 112,5 g d'eau et 192 g d'urée entre 60 et 45°C et maintenir 30 minutes dans cette plage de température jusqu'à dissolution complète de l'urée, refroidir à 23°C et ajouter successivement 0,5 à 0,6 % d'APBT (on prend de 1 à 1,2 % de sa solution aqueuse à 50 %, commercialisée sous le nom de BAYHIBIT® AM) et 0,25 % polyacrylate d'ammonium (on prend 0,5 % de la solution à 50 % commercialisée sous le nom de COATEX®P90) par rapport au poids total de solution de résine phénolique modifiée urée. L'homogénéisation du milieu est obtenue quasi instantanément.

Les caractéristiques de la résine ainsi obtenue sont dans les limites suivantes :

| | |
|---|---|
| Extrait sec (170°C) | 46 ± 0,5 % |
| Viscosité (23°C) | 25 - 30 mPa.s |
| pH (23°C) | 8,5 - 9 |
| DRT à 130°C | 95 à 120" |
| Phénol libre | 0,3 à 0,4 % |
| Formol libre | 0,3 % environ |
| Tolérance à l'eau | infinie |
| Couleur | brun foncé |

### EXEMPLE 3 : comparatif d'une résine "précipitée-filtrée"

A une solution de 351 g de phénol dans 175,5 g d'eau, additionner 30,9 g d'hydroxyde de calcium, puis introduire en une heure, entre 60 et 70°C, 717,8 g de formol en solution aqueuse à 50 %. Maintenir en palier à 70°C jusqu'à obtention d'une tolérance à l'eau salée (solution 50 g NaCl/l) voisine de 1:25 à 23°C. Refroidir à 60°C.

Ajouter 112,5 g d'eau et 192 g d'urée entre 45 et 60°C, maintenir 30 minutes dans cette plage de température jusqu'à dissolution complète de l'urée puis refroidir entre 10 et 20°C. Introduire lentement de l'acide sulfurique à 37 % jusqu'à ce que la solution de résine atteigne un pH de 7,0. Il se forme un volumineux précipité de sulfate de calcium que l'on sépare par filtration. La solution de résine maintenant débarrassée du précipité est ajustée avec un solution d'ammoniaque à 25 % afin d'amener le pH à 8,5 - 9. Le produit obtenu ne présente aucun précipité, et aucun précipité ne s'y forme au stockage sur un mois, bien au-delà de la durée de vie du produit c'est-à-dire de la période de garantie de conservation des propriétés initiales rapportées au tableau ci-après.

| | |
|---|---|
| Extrait sec (170°C) | 46 ± 0,5 % |
| Viscosité (23°C) | 25 - 30 mPa.s |
| pH (23°C) | 8,5 - 9 |
| DRT à 130°C | 90 à 120 secondes |
| Phénol libre | 0,3 - 0,4 % |
| Formol libre | 0,3 - 0,5 % environ |
| Tolérance à l'eau | Infinie |
| Couleur | Brun foncé |
| Durée de vie | 15 jours |

### EXEMPLE 4 : Comparatif

A une solution de 351 g de phénol dans 178,5 g d'eau, ajouter 30,9 g d'hydroxyde de calcium, puis introduire en une heure, entre 60 et 70°C, 717,8 g de formol en solution aqueuse à 50 %. Maintenir en palier à 70°C jusqu'à ce qu'on mesure sur le produit une tolérance à l'eau salée à 70°C (solution à 50 g de NaCl/l) voisine de 1:25 à 23°C. Refroidir à 60°C.

Introduire alors 112,5 g d'eau et 192 g d'urée entre 60 et 45°C et maintenir 30 minutes dans cette plage de température jusqu'à dissolution complète de l'urée. Refroidir entre 10 et 20°C, ajuster le pH à 9,8 avec une solution d'ammoniaque à 25 % et ajouter 227 g d'une solution aqueuse de sulfate d'ammonium à 25 %.

La résine ainsi obtenue présente une stabilité d'environ une heure, qui en limite l'utilisation uniquement au site d'utilisation, sans possibilité ni de transport ni de stockage intermédiaire.

## Revendications

1. Procédé pour la fabrication d'une résine phénol-formaldéhyde modifiée à l'urée, à faibles taux de phénol et de formol résiduels, en solution aqueuse ne donnant pas lieu à formation de précipité sur des durées d'au moins un mois, consistant en une condensation de phénol et de formol en présence d'hydroxyde alcalinoterreux, en particulier de calcium, avec addition d'urée en quantité telle que le rapport pondéral urée / phénol inférieur ou tout au plus égal à 1:1, et de préférence de 0,4:1 à 0,6:1, caractérisé en ce l'on ajoute au résultat de ladite condensation à la fois un agent chélatant/séquestrant et un polymère anionique dispersant.

2. Procédé selon la revendication 1, caractérisé en ce que l'agent chélatant / séquestrant appartient au groupe comprenant l'acide 2-phosphono-1,2,4-butane tricarboxylique, l'acide nitrilotriacétique, l'acide éthylènediamine tétracétique, la diéthylènetriamine pentacétique et les aminophosphonates.

3. Procédé selon la revendication 1, caractérisé en ce que l'agent chélatant / séquestrant est l'acide 2-phosphono-1,2,4-butane tricarboxylique.

4. Procédé selon la revendication 1, caractérisé en ce que l'agent chélatant / séquestrant est l'acide hydroxyethylidine-1,1-diphosphonique.

5. Procédé selon la revendication 1, caractérisé en ce que le polymère anionique dispersant appartient au groupe comprenant les lignosulfonates, les polynaphtalènesulfonates, les polyphosphonates, les polyphosphates et les polymères carboxyliques.

6. Procédé selon la revendication 1, caractérisé en ce que le polymère anionique dispersant est un lignosulfonate.

7. Procédé selon la revendication 1, caractérisé en ce que le polymère anionique dispersant est un polyacrylate d'ammonium, de sodium ou de potassium.

8. Procédé selon la revendication 1, caractérisé en ce que le polymère anionique dispersant est un co- ou ter-polymère acrylique d'ammonium, de sodium ou de potassium.

9. Procédé selon la revendication 1 et 8, caractérisé en ce que les co- ou ter-polymères acryliques d'ammonium, de sodium ou de potassium contiennent des substituants stériquement encombrés, notamment ex-acide 2-acrylamido-2-méthyl propane sulfonique, ex-acrylate d'hydroxypropyle, ex-diméthylitaconate ou ex-acide styrène sulfonique.

10. Procédé selon la revendication 1, caractérisé en ce que l'agent chélatant/séquestrant et le polymère anionique dispersant sont présents dans la résine à raison respectivement de 0,3 à 1,0 % en poids, et 0,1 à 1,0 % en poids.

11. Compositions aqueuses de résines formophénolique modifiées à l'urée ne présentant aucun signe de précipitation au stockage sur une durée d'au moins 10 jours, la résine étant le produit de la condensation de phénol et de formol en présence d'hydroxyde alcalino-terreux, en particulier de calcium, avec addition d'urée en quantité telle que le rapport pondéral urée / phénol inférieur ou tout au plus égal à 1:1, et de préférence de 0,4:1 à 0,6:1, dans lequel on ajouté de 0,3 à 1,0 % d'agent chélatant / séquestrant et de 0,1 à 1,0 % de polymère anionique dispersant, en poids par rapport à la résine.

12. Compositions de résine phénolique selon la revendication 11, caractérisée en ce que l'agent chélatant / séquestrant est l'acide 2-phosphono-1,2,4-butane tricarboxylique ou l'acide l'acide hydroxyethylidine-1,1-diphosphonique et le polymère anionique dispersant est un lignosulfonate ou un polyacrylate ou coou ter-polymère acrylique d'ammonium, de sodium ou de potassium.
